(19) **Europäisches Patentamt**

**European Patent Office**

**Office européen des brevets**

(11) **EP 1 305 982 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.7: **H05B 6/80**, H05B 6/10, C09J 5/06, C09J 5/00, C09J 5/02, H01J 37/32, C09J 11/04, C09J 9/00

(21) Anmeldenummer: **01960540.1**

(22) Anmeldetag: **24.07.2001**

(86) Internationale Anmeldenummer:
**PCT/EP2001/008515**

(87) Internationale Veröffentlichungsnummer:
**WO 2002/013580 (14.02.2002 Gazette 2002/07)**

(54) **FERROMAGNETISCHE RESONANZANREGUNG UND IHRE VERWENDUNG ZUR ERWÄRMUNG TEILCHENGEFÜLLTER SUBSTRATE**

FERROGMAGNETIC RESONANCE EXCITATION AND ITS USE FOR HEATING SUBSTRATES THAT ARE FILLED WITH PARTICLES

MISE EN RESONANCE FERROMAGNETIQUE ET SON APPLICATION POUR LE RECHAUFFEMENT DE SUBSTRATS REMPLIS DE PARTICULES

(84) Benannte Vertragsstaaten:
**AT BE CH CY DE DK ES FI FR GB GR IE IT LI LU MC NL PT SE TR**

(30) Priorität: **03.08.2000 DE 10037883**

(43) Veröffentlichungstag der Anmeldung:
**02.05.2003 Patentblatt 2003/18**

(73) Patentinhaber: **Henkel Kommanditgesellschaft auf Aktien 40589 Düsseldorf-Holthausen (DE)**

(72) Erfinder:
• **KIRSTEN, Christian, N.**
  **51399 Burscheid (DE)**
• **ROTH, Marcel**
  **40589 Düsseldorf (DE)**
• **LAMMERSCHOP, Olaf**
  **47809 Krefeld (DE)**
• **SAUER, Hans-Martin**
  **64297 Darmstadt (DE)**

(56) Entgegenhaltungen:
**EP-A- 0 734 048          WO-A-99/24520
DE-A- 19 954 960          US-A- 5 833 795**

**Beschreibung**

Die vorliegende Erfindung betrifft ein Verfahren sowie eine Vorrichtung zum Erwärmen teilchengefüllter Substrate durch gleichzeitige Einwirkung von Mikrowellen und eines magnetischen Gleichfeldes. Das Verfahren kann generell zum Erwärmen solcher Substrate herangezogen werden. Es ist insbesondere für Substrate geeignet, die einen abgebundenen oder einen nicht abgebundenen Klebstoff oder einen Schmelzklebstoff darstellen. Je nach Ausführungsform kann das Verfahren zum Verkleben von Körperoberflächen dienen, wobei ein nicht abgebundener Klebstoff oder ein Schmelzklebstoff in Folge der Erwärmung zu einer Verklebung der Körperoberflächen führt. In einer weiteren Ausführungsform kann das Verfahren zum Lösen von Klebeverbindungen dienen, wobei dies bei geeigneten Klebstoffen wie beispielsweise Schmelzklebstoffen reversibel erfolgen kann. Unter Einwirkung der Mikrowellenstrahlung und des magnetischen Gleichfeldes erwärmt sich der Klebstoff, so daß die verklebten Körper - ggf. unter Einfluß einer mechanischen Kraft - voneinander getrennt werden können.

In vielen Industriezweigen, insbesondere in der metallverarbeitenden Industrie wie z.B. der Fahrzeugindustrie, im Nutzfahrzeugbau sowie deren Zulieferindustrien oder auch bei der Herstellung von Maschinen und Haushaltsgeräten. oder auch in der Bauindustrie werden zunehmend gleiche oder verschiedene metallische und nicht-metallische Substrate klebend bzw. abdichtend miteinander verbunden. Diese Art des Fügens von Bauteilen ersetzt in zunehmenden Maße die klassischen Fügeverfahren wie Nieten, Schrauben oder Schweißen, weil das Kleben/Abdichten eine Vielzahl von technologischen Vorteilen bietet. Im Gegensatz zu den traditionellen Fügeverfahren wie Schweißen, Nieten, Schrauben ist das Lösen und Separieren von geklebten Bauteilen vielfach noch nicht befriedigend gelöst.

Die EP-A-735121 beschreibt einen Klebfolien-Abschnitt für eine rückstandsfreie und beschädigungslose und wieder lösbare Verklebung bestehend aus einer doppelseitig klebenden Klebefolie mit einem aus der Klebefolie herausragenden Anfasser, an dem durch Ziehen in Richtung der Verklebungsebene die Verklebung lösbar ist. Dieses Verfahren ist jedoch nur anwendbar, wenn die Klebstoffschicht der Klebefolie ein Haftklebstoff ist. Mit derartigen Klebeverbindungen lassen sich jedoch nur geringe Zug- bzw. Schälfestigkeiten erreichen, so daß dieses Verfahren nur zum Fixieren von kleinen Gegenständen wie Haken und dergleichen im Haushaltsbereich anwendbar ist.

Die DE-A-4230116 beschreibt eine Klebstoffzusammensetzung enthaltend eine Abmischung eines aliphatischen Polyols mit einem aromatischen Dianhydrid. Diese Klebstoffzusammensetzung ermöglicht ein Auflösen der Verklebung in wäßrig alkalischen Systemen, konkret genannt werden Sodalösungen oder Alkalilaugen. Es wird vorgeschlagen, diese wäßrig alkalisch löslichen Klebstoffe zur rationellen Herstellung von Magnetteilen und anderen Kleinteilen zu verwenden, wobei der Klebstoff nur zur Herstellung von Hilfsklebungen bei der Materialbearbeitung verwendet werden soll. Sehr ähnliche Klebstoffe sind auch als Etikettierklebstoffe bekannt, die ein Ablösen der Etiketten im wäßrigen oder wäßrig alkalischen Milieu bei Getränkeflaschen und ähnlichen Gebinden erlauben.

Die DE-A-4328108 beschreibt einen Kleber für Bodenbeläge und ein Verfahren zum Lösen dieser verklebten Bodenbeläge mit Hilfe von Mikrowellenenergie. Dazu soll der Kleber elektrisch leitfähig sein und durch ein Mikrowellengerät erweichbar sein. Konkret vorgeschlagen werden lösungsmittelfreie Kontaktkleber auf Basis von (wäßrigen) Polymerdispersionen, die Kupferpulver oder Aluminiumpulver enthalten. Gemäß der Lehre dieser Schrift sollen die verklebten Bodenbelagsstücke zum Lösen der Klebeverbindung in ein Mikrowellengerät gelegt werden, damit die Klebeschicht erweicht werden kann, so daß man die Bodenbelagsstücke nach dem Erweichen der Kleberschicht manuell abziehen kann.

Die WO 94/12582 beschreibt einen Haftkleber auf der Basis einer Mischung aus einer wäßrigen Polymerdispersion und einem in einem organischen Lösungsmittel gelösten Klebstoff sowie Klebrigmachern und Verdickungsmitteln. Dieser Haftklebstoff hat in einem breiten Temperaturbereich eine konstante Klebkraft und ermöglicht das mechanische Trennen der Klebeverbindungen. Angegeben wird, daß sich diese Klebeverbindungen zum Verkleben von Dämm- und/oder Zierflächenteilen wie z.B. Dämm-Materialien oder Kunststoff-Folien eignet.

Die DE-A-19526351 beschreibt ein Lösegel für Lacke, Farben und Kleber auf der Basis organischer Lösungsmittel unter Zusatz von Netz-, Verdickungs- und anderen üblichen Mitteln. Als konkretes Anwendungsfeld werden die Verwendung als Abbeizmittel bei der Entschichtung von 2 K-Lacken genannt. Obwohl erwähnt wird, daß derartige Mischungen auch zum Einsatz bei 2 K-Klebern geeignet seien, fehlen jedwede konkreten Angaben zum Lösen derartiger Klebeverbindungen. In ähnlicher Weise beschreibt die WO 87/01724 eine Zusammensetzung zur Entfernung von ausgehärteten Polysulfiddichtstoffen oder Beschichtungen. Hierbei werden in einem Lösungsmittel oder Lösungsmittelgemisch bestehend aus Dimethylformamid oder Dimethylacetamid oder deren Mischung mit aromatischen Lösungsmitteln wie Toluol oder Xylol ein Alkalimetall- oder Amoniumthiolat auf der Basis von Alkyl- oder Phenylthiolaten gelöst und auf ausgehärtete Polysulfiddichtstoffe oder Beschichtungsmaterialien aufgetragen, um diese anschließend von ihren Substraten, wie z. B. Flugzeugtanks entfernen zu können. Angaben zum Lösen von Klebeverbindungen werden nicht gemacht.

In der Arbeit "Reversible Crosslinking in Epoxy Resins", Journal of Applied Polymer Science, 39, 1439 bis 1457 (1990) beschreiben V.R. Sastri und G.C. Tesoro Epoxyharze mit verschiedenen Epoxyäquivalenten, die mit 4,4'-Dithioanilin vernetzt sind. Dort wird vorgeschlagen, das vernetzte Harz zu 600 µm großen Teilchen zu mahlen. Dieses feingemahlene Pulver wird dann in einer Lösung aus Diglyme, Salzsäure und Tributylphosphin unter Rückfluß gekocht, bis das gemahlene Harz aufgelöst ist. Analoge Offenbarungen werden in der US-A-4,882,399 von den gleichen Autoren gemacht. Konkrete Angaben über lösbare Klebeverbindungen fehlen in beiden Dokumenten.

Die WO 99/07774 beschreibt Klebstoffe, bei denen zumindest eine Aufbaukomponente Di- oder Polysulfidbindungen enthält und die nach dem Aushärten durch Auftragen von Lösungen von Spaltungsagenzien auf der Basis von Mercaptoverbindungen wieder gelöst werden können. Dadurch wird es möglich, verklebte Bauteile auf chemischem Wege in der Klebfuge wieder zu trennen. Gemäß der Lehre dieser Schrift kann das Spaltungsagenz auch in einer bei Raumtemperatur inerten Form der Klebstoff-Formulierung zugemischt werden, wobei die Spaltung nach Aktivierung des Reagenzes bei erhöhter Temperatur erfolgen kann. Konkrete Ausbildungen dieser inerten Form des Spaltungsagenzes werden nicht genannt. Obwohl die Verwendung von lösungsmittelhaltigen Spaltungsagenzien es erlaubt, Klebeverbindungen wieder zu lösen, ist es wünschenswert, auf lösungsmittelhaltige Spaltungsagenzien verzichten zu können, da diese Vorgehensweise

* wegen der diffusionsbedingten Einwirkungszeit der Spaltungsagenzien sehr zeitraubend ist
* die Handhabung von lösungsmittelhaltigen Spaltungsagenzien aus Umweltschutzgründen vermieden werden sollte.

Die DE-A-19924138 beschreibt Klebstoffzusammensetzungen, die im Bindemittelsystem nanoskalige Teilchen mit ferromagnetischen, ferrimagnetischen, superparamagnetischen oder piezoelektrischen Eigenschaften enthalten. Diese Klebstoffzusammensetzungen eignen sich dazu, für die Herstellung lösbarer Klebeverbindungen verwendet zu werden. Unter Einwirkung elektromagnetischer Strahlung lassen sich diese Klebstoffverbindungen so hoch erwärmen, daß die Klebeverbindung leicht lösbar ist.

Die DE-A-35 01 490 beschreibt eine in den Rahmen einer Autokarosserie eingeklebte Glasscheibe unter Verwendung eines elastomeren vernetzten Klebers. Diese Scheibe hat auf ihrer Oberfläche im Klebebereich einen mit Stromanschlüssen versehenen Leitstreifen, der auf seiner dem Kleber zugewandten Seite eine Trennschicht aus einem thermisch schmelzbaren Material wie Weichlot oder Thermoplast trägt. Zum Lösen der Klebeverbindung wird der Leitstreifen unter Strom gesetzt, er erwärmt sich, die Trennschicht schmilzt und die Scheibe läßt sich von der Karosserie lösen.

Die EP-A-0521825 beschreibt eine lösbare Klebeverbindung, bei welcher die miteinander verbundenen Teile mittels einer dazwischen eingebrachten Kleberaupe gefügt sind. Diese Kleberaupe enthält ein flächiges thermoplastisches Trennelement. Dieses thermoplastische Trennelement enthält intrinsisch leitfähige Polymere, elektrisch leitfähige Ruße, Graphit, Metallpulver, Metallfasern oder Metallnadeln, metallbeschichtete Füllstoffe, metallbeschichtete Mikroglaskugeln, metallbeschichtete Textilfasern oder Gemische dieser Materialien. Beim Erwärmen der Klebeverbindung durch Strom oder Strahlungszufuhr wird diese thermoplastische Trennschicht erweicht, so daß die miteinander verbundenen Anteile mechanisch voneinander getrennt werden können. Konkret schlägt die EP-A-521825 vor, derartige lösbare Klebeverbindungen bei der Direktverglasung im Fahrzeugbau einzusetzen.

Der vorliegenden Erfindung liegt die Aufgabe zugrunde, ein neues Verfahren zum Erwärmen eines Substrats, insbesondere eines Klebstoffs, zur Verfügung zu stellen, wobei eingestrahlte Energie lediglich innerhalb des Substrats und dort auf besonders effiziente Weise in Wärme umgesetzt wird. Insbesondere sollen durch dieses Verfahren Klebeverbindungen gezielt hergestellt bzw. - ggf. reversibel - gezielt gelöst werden können.

Die Erfindung betrifft ein Verfahren zum Erwärmen eines Substrats, das, bezogen auf das Gesamtgewicht des Substrats, 0,1 bis 70 Gew.-%, vorzugsweise 1 bis 30 Gew.-%, insbesondere 5 bis 20 Gew.-% metallische, magnetische, ferrimagnetische, ferromagnetische, antiferromagnetische oder superparamagnetische Partikel mit einer mittleren Teilchengröße zwischen 1 und 5000 nm enthält, wobei man das Substrat einer elektromagnetischen Strahlung aussetzt, dadurch gekennzeichnet, daß die elektromagnetische Strahlung eine Mikrowellenstrahlung mit einer Frequenz im Bereich von 1 bis 300 GHz darstellt und man gleichzeitig auf das Substrat ein magnetisches Gleichfeld einwirken läßt, dessen Feldstärke mindestens doppelt so hoch ist wie die Stärke des Erdmagnetfeldes.

Die genannte Einwirkung der Mikrowellenstrahlung in Verbindung mit dem magnetischen Gleichfeld führt in den im Substrat eingelagerten Partikeln zur Erscheinung der ferromagnetischen Resonanz. Die Existenz der ferromagnetischen Resonanz (FMR), einer elektromagnetischen Resonanzerscheinung in ferromagnetischen Körpern, die auf der kohärenten Präzession der atomaren magnetischen Momente beruht, ist prinzipiell seit 1946 bekannt.

In größerem Umfang werden seit etwa 1960 FMR-aktive Materialien in Mikrowellen-Schaltelementen eingesetzt. Hierbei wird die Eigenschaft dieser FMR-aktiven Stoffe ausgenutzt, daß sie in Abhängigkeit eines von außen angelegten Gleichstrom-Magnetfeldes ihre Reflexions- und Transmissionseigenschaften für elektromagnetische Wellen der betreffenden Frequenz drastisch ändern können. Daß in Mikrowellen-Anlagen hoher Leistung hierbei eine starke Wärmeentwicklung innerhalb des FMR-aktiven Materials auftreten kann, ist eine seit langem bekannte Tatsache, die bisher jedoch nicht systematisch bezüglich einer möglichen technischen Anwendbarkeit hin untersucht wurde.

Eine weitere technische Anwendung von großer wirtschftlicher Bedeutung besitzen ferromagnetische Resonanz-Phänomene in zahlreichen Ferrit-Materialen, wie sie in vielen Rundfunk- und mobilen Fernsprechgeräten als Antennenmaterial oder Hochfrequenzüberträger eingesetzt werden. Hierbei werden verschiedene magnetische, zunächst als feinkörnige Pulver vorliegende Metalloxide unter Druck und bei hoher Temperatur in einer Pressform zu einem dichten Werkstück versintert. Im Gegensatz zu erfindungsgemäß verwendbaren Polymer-Magnetit-Kompositen legt man bei den Ferriten ebenso wie bei den oben beschriebenen Mikrowellen-Schaltelementen auf einen innigen Kontakt der einzelnen Oxidpartikel Wert, um ein breites und gleichmäßiges Resonanzspektrum zu erzielen. Bei den zur Wärmeerzeugung dienenden Polymer-Magnetit-Kompositen kommt es hingegen auf eine möglichst starke Erhöhung der Mikrowellenabsorption bei einer einzelnen Frequenz an. Die Bandbreite des Absorptionsbereichs darf (und soll) hierbei möglichst klein bleiben.

Seit etwa 1990 zeichnen sich neue Anwendungsmöglichkeiten für FMR-aktive Materialien in Zusammenhang mit nanostrukturierten, superparamagnetischen Werkstoffen ab, welche die Möglichkeit eröffnen, In-situ-Messungen bestimmter hydrodynamischer Kenngrößen in Flüssigkeitsströmungen durchzuführen. Von besonderer Bedeutung sind magnetische Resonanzeffekte in Ferrofluiden, wobei aber neben FMR auch solche Resonanzphänomene auftreten, die durch die mechanische Beweglichkeit der Magnetpartikel im Trägerfluid bedingt sind.

Die Erwärmung von Kunststoff-Magnetpartikel-Kompositen durch magnetische Wechselfelder gelingt prinzipiell nicht nur durch das hier vorgestellte FMR-basierten Verfahren, sondern auch durch Ummagnetisierung der magnetischen Komponente in einem starken äußeren Wechselstromfeld. Im Unterschied zum FMR-basierten Verfahren werden bei der Erwärmung durch Ummagnetisierung in der Regel die magnetischen Hystereseverluste ausgenutzt, die auftreten, wenn man die Magnetisierung ferromagnetischer Materialien mit von Null verschiedener Koerzitivkraft in einem äußeren Magnetfeld umdreht. Der mikroskopische Mechanismus, der hier wirksam ist, beruht auf der induzierten Wanderung von Bloch-Wänden zwischen den magnetischen Domänen entgegengesetzter Magnetisierungsrichtung innerhalb jedes einzelnen Magnetpartikels.

Grundsätzlich kennt man neben der hier beschriebenen FMR-Methode zwei Typen von Wärmeerzeugung von superparamagnetischen Partikeln: Die erste beruht auf der Tatsache, daß bei Frequenzen oberhalb einiger MHz jedes magnetische Material eine gewisse Energieabsorption hat, die um mehrere Größenordnungen kleiner ist als die oben beschriebene Energieabsorption durch Blochwand-Wanderung. Hierbei muß auch bedacht werden, daß eine präzise Abgrenzung superparamagnetischen Stoffverhaltens gegenüber einem schwach ausgeprägten Ferromagnetismus mit kleiner, aber endlicher Koerzitivkraft praktisch oft schwierig ist, so daß auch die superparamagnetische Energieabsorption in solchen Systemen durchaus die Folge der Bewegung vereinzelt vorkommender Blochwände sein kann.

Die zweite Klasse superparamagnetischer Systeme stellen die Brownschen Ferrofluide dar. Hierbei wird die Ummagnetisierung dadurch bewirkt, daß sich die magnetischen Partikel in dem sie umgebenden Trägerfluid unter dem Einfluß des sich ändernden Magnetfeldes als ganzes drehen. Die Umkehr der Magnetisierung und damit die Wärmeerzeugung können deshalb nicht mit der Hysterese der magnetischen Stoffkomponente in Zusammenhang gebracht werden, sondern hängen von der viskosen Reibung der Teilchen im Trägerfluid ab. Da die Rotation der Magnetpartikel ein vergleichsweise langsamer Vorgang ist, genügen Frequenzen in der Größenordnung von wenigen Kilohertz zu einer deutlichen Wärmeerzeugung. Offenkundig eignen sich Brownsche Ferrofluide dennoch nicht als energieabsorbierende Additive zur Erwärmung fester Matrices, da sie im "verfestigten" Zustand ihre superparamagnetischen Eigenschaften verlieren.

Das erfindungsgemäße FMR-basierte Verfahren ist bei jedem der erwähnten Komposite anwendbar, da die Wärmeerzeugung nicht an die Umorientierung atomarer magnetischer Momente gebunden ist, sondern nur an deren Kreiselpräzession um eine beliebig orientierte Ruherichtung.

Dabei kann die Erwärmung beim FMR-Verfahren durch ein dem Mikrowellenfeld überlagertes Gleichstromfeld (magnetisches Gleichfeld) gesteuert werden. Feldvariationen in der Größenordnung um 10 kA/m genügen, um die Mikrowellenabsorption ein- bzw. auszuschalten. Durch geeignete Wahl des Feldverlaufs des überlagerten Magnetfelds kann man die Energieabsorption des Kunststoff-Magnetpartikel-Komposits räumlich variieren und gezielte Erwärmungsmuster erzeugen. Dies ist bei der Erwärmung durch Ummagnetisierung nicht möglich.

Ein weiterer Unterschied zwischen dem Verfahren der Erwärmung durch Ummagnetisierung und dem FMR-Verfahren besteht darin, daß ersteres in Gegenwart von Metallteilen starke Wirbelströme und somit eine meist unerwünschte Aufheizung dieser Teile bewirkt, letzteres aber keine derartige Nebenwirkung zeigt. Die physikalische Ursache dieses unterschiedlichen Verhaltens liegt in den sehr verschiedenen Betriebsfrequenzen beider Verfahren.

Während für die Erwärmung durch Ummagnetisierung Wechselfelder mit einer Frequenz unterhalb von ca. 1 MHz verwendet werden, liegen die Frequenzen beim FMR-Verfahren bei mehreren GHz. Bei derart hohen Frequenzen vermag das magnetische Wechselfeld wegen des sog. Skin-Effekts nicht in eine Metalloberfläche einzudringen und Wirbelströme zu induzieren. Eine dargebotene Metalloberfläche ist im vorliegenden Fall sogar als günstiger Umstand anzusehen, da diese die Konzentration der Mikrowellenenergie in einer auf der Metalloberfläche aufgebrachten, Magnetpartikel enthaltenden Lack- oder Klebstoffschicht unterstützt.

Wie vorstehend bereits angedeutet, stellt das zu erwärmende Substrat vorzugsweise ein Kunststoff dar. Die Erwärmung von Kunststoffen, die eine Beimischung eines feinkörnigen (nanokristallinen), pulverförmigen beispielsweise ferro- oder superparamagnetischen Stoffes enthalten, in einem Mikrowellenfeld, beruht wie im folgenden detaillierter beschrieben, auf der Anregung ferromagnetischer Resonanzmoden: Die zu erwärmende Kunststoff-Magnetpulver-Mischung wird in einem besonderen Mikrowellen-Hohlraumresonator einem Mikrowellenfeld ausgesetzt. Der Mikrowellenresonator ist mit einem zusätzlichen Permanent- oder Elektromagneten ausgestattet, der ein magnetisches Gleichfeld erzeugt, dessen Feldlinien innerhalb der Erwärmungszone vorzugsweise senkrecht auf den magnetischen Feldlinien des Mikrowellenfeldes stehen. Die Frequenz f der Mikrowellen und die Stärke $H_{dc}$ des magnetischen Gleichfeldes sind so eingestellt, daß die Beziehung

$$f = \gamma \mu_0 \, ( H_{dc} + H_A + q_m \, M_s ) \qquad \text{(Formel 1)}$$

erfüllt ist, wobei $\gamma$ = 28.0 GHz/T die gyromagnetische Konstante, $\mu_0 = 4\pi \, 10^{-7}$ Vs/Am die Vakuums-Permeabilität, $H_A$ und $M_s$ das spezifische magnetische Kristallanisotropiefeld und die Sättigungsmagnetisierung der ferromagnetischen Stoffkomponente (in Einheiten von A/m), sowie $q_m$ den für den angeregten Resonanzmoden spezifischen Geometriefaktor darstellen (Für den sog. homogenen Resonanzmoden in sphärischen Magnetpartikeln ist $q_m$ = 0).

Die magnetische Stoffkomponente formt gemäß der Beziehung

$$\Delta W / \Delta V = \pi \mu_0 \, f \, I_{m\chi(f)} \, (H_{rf})^2 \qquad \text{(Formel 2)}$$

die magnetische Mikrowellen-Feldenergie in eine Wärmeleistung $\Delta W$ pro Volumenelement $\Delta V$ um, wobei $H_{rf}$ der Effektivwert der magnetischen Feldstärke des Mikrowellenfeldes der Frequenz f ist und $I_{m\chi(f)}$ der Imaginärteil der magnetischen Hochfrequenzsuszeptibilität

$$\chi(f) \; = \; \gamma \, M_s f_{res} c \, / \, [(f - 2\pi\iota/\tau)^2 - \, f_{res}^2] \quad \text{(Formel 3)}$$

des Komposits bei einem Volumenanteil c an magnetischem Nanomaterial mit einer Resonanzfrequenz $f_{res}$ gemäß Formel 1 sowie einer von der Materialqualität des Komposits abhängigen mittleren Lebensdauer $\tau \sim 2$ ns der FMR-Resonanzmoden. Der Imaginärteil der Hochfrequenzsuszeptibilität und somit die Mikrowellenabsorption des Komposits besitzen bei der Frequenz $f = f_{res}$ ein scharfes Maximum.

In dem erfindungsgemäßen Verfahren wird das magnetische Gleichfeld vorzugsweise so eingestellt, daß seine Feldstärke mindestens in einem Raumbereich, in dem sich das zu erwärmende Substrat befindet, mindestens doppelt so hoch ist wie die Stärke des Erdmagnetfeldes am jeweiligen Ort der Ausführung des Verfahrens.

Die metallischen, magnetischen, ferrimagnetischen, ferromagnetischen, antiferromagnetischen oder superparamagnetischen Partikel haben vorzugsweise eine mittlere Teilchengröße zwischen 1 und 500, insbesondere zwischen 2 und 100, beispielsweise zwischen 5 und 30 nm. In letzter Zeit ist es üblich geworden, Partikel mit derartigen Teilchengrößen im Nanometerbereich als "Nanopartikel" zu bezeichnen. Verfahren zur Herstellung derartiger Nanopartikel sind im Stand der Technik bekannt, beispielsweise aus der DE-A-196 14 136. Um die Neigung solcher nanoskaliger Partikel zur Agglomeration oder zum Zusammenwachsen zu verringern, werden diese üblicherweise oberflächenmodifiziert bzw. oberflächenbeschichtet. Durch geeignete Oberflächenbeschichtung kann auch die Bindung zur organischen Matrix verbessert werden. Die genannte DE-A-196 14 136 beschreibt in den Spalten 8 bis 10 ein Verfahren zur Herstellung agglomeratfreier nanoskaliger Teilchen am Beispiel von Eisenoxidteilchen. Weitere Möglichkeiten zur oberflächlichen Beschichtung nanoskaliger Teilchen sind in der DE-A-197 26 282 angegeben.

Beispielsweise können die metallischen, magnetischen, ferrimagnetischen, ferromagnetischen, antiferromagnetischen oder superparamagnetischen Partikel ausgewählt werden aus Aluminium, Cobalt, Eisen, Nickel oder deren Legierungen, Metalloxiden vom Typ des Bariumhexaferrits, n-Maghemits ($\gamma$-$Fe_2O_3$), n-Magnetits ($Fe_3O_4$) oder der Ferrite vom Typ des $MeFe_2O_4$, wobei Me ein zweiwertiges Metall ausgewählt aus Mangan, Kupfer, Zink, Cobalt, Nickel, Magnesium, Calcium, Cadmium ist. Dabei eignen sich insbesondere solche Partikel, bei denen die mittlere Lebensdauer der magnetischen Anregung durch ein Feld von 2,45 GHz mindestens 2 Nanosekunden beträgt. Dies ist nur bei nanoskaligen Teilchen und insbesondere bei superparamagnetischen Partikeln der Fall. Ein bevorzugtes Beispiel hierfür ist Magnetit.

Als elektromagnetische Strahlung wählt man vorzugsweise eine Mikrowellenstrahlung mit einer Frequenz im Bereich von 1,5 bis 10 GHz, insbesondere im Bereich von 2 bis 3 GHz.

Das magnetische Gleichfeld läßt man vorzugsweise derart auf das Substrat einwirken, daß die magnetischen Feldlinien des Gleichfeldes innerhalb des Substrats zumindest teilweise, d. h. an zumindest einer Stelle, in einem Winkel zwischen 45 und 135 ° zum Richtungsvektor der elektromagnetischen Strahlung verlaufen. Vorzugsweise liegt dieser Winkel zumindest an einem Ort innerhalb des Substrats möglichst nahe bei 90 °, beispielsweise im Bereich zwischen 80 und 100°.

Im Sinne der bevorzugten technischen Anwendung zum Herstellen oder (reversiblen) Lösen von Klebeverbindungen handelt es sich bei dem Substrat vorzugsweise um einen abgebundenen oder nicht abgebundenen Klebstoff oder um einen Schmelzklebstoff.

Als Bindemittelmatrix für die Klebstoffe können im Prinzip alle für Klebstoffe geeignete Polymere eingesetzt werden. Beispielhaft erwähnt seien für die thermoplastisch erweichbaren Klebstoffe die Schmelzklebstoffe auf der Basis von Ethylen-Vinylacetatcopolymeren, Polybutene, Styrol-Isopren-Styrol bzw. Styrol-Butadien-Styrolcopolymere, thermoplastische Elastomere, amorphe Polyolefine, lineare, thermoplastische Polyurethane, Copolyester, Polyamidharze, Po-Iyamid/EVA-Copolymere, Polyaminoamide auf Basis von Dimerfettsäuren, Polyesteramide oder Polyetheramide. Weiterhin eignen sich prinzipiell die bekannten Reaktionsklebstoffe auf der Basis ein- bzw. zweikomponentiger Polyurethane, einoder zweikomponentiger Polyepoxide, Silikonpolymere (ein- bzw. zweikomponentig), silanmodifizierte Polymere, wie sie beispielsweise bei G. Habenicht, "Kleben: Grundlagen, Technologie, Anwendungen", 3. Auflage, 1997 im Kapitel 2.3.4.4 beschrieben werden. Die (Meth)acrylat-funktionellen Reaktionskleber auf der Basis peroxidischer Härter, anaerober Härtungsmechanismen, aerober Härtungsmechanismen oder UV-Härtungsmechanismen eignen sich ebenfalls als Klebstoffmatrix. Konkrete Beispiele für den Einbau thermisch labiler Gruppen in Reaktionsklebstoffe zum Ziel der späteren Spaltung dieser Bindungen sind die Klebstoffe gemäß WO 99/07774, bei denen zumindest eine Aufbaukomponente Di- oder Polysulfidbindungen enthält. In einer besonders bevorzugten Ausführungsform können diese Klebstoffe noch feste Spaltungsreagenzien in kristalliner, verkapselter, chemisch blockierter, topologisch oder sterisch inaktivierter oder kinetisch gehemmter, fein dispergierter Form enthalten, wie sie in der noch unveröffentlichten DE-A-199 04 835.5 auf den Seiten 14 bis 16 offenbart werden. Eine andere Möglichkeit ist die Verwendung von Polyurethanklebstoffen, die als Spaltungsagenz die in der DE-A-198 32 629 offenbarten aminischen Derivate enthalten. Die in den beiden vorgenannten Schriften offenbarten Spaltungsagenzien sind ausdrücklich Bestandteil der vorliegenden Erfindung.

Für das erfindungsgemäße Verfahren können unterschiedliche Ausführungsformen unterschieden werden. Beispielsweise kann es sich bei dem Substrat um einen nicht abgebundenen Klebstoff handeln, der infolge der durch die Einwirkung der elektromagnetischen Strahlung hervorgerufenen Erwärmung abbindet. Dies kann beispielsweise durch chemische Reaktion zwischen geeigneten funktionellen Gruppen erfolgen, wie sie im Bereich der thermisch härtbaren Klebstoffe bekannt sind. In dieser Ausführungsform dient das Verfahren zu einer gesteuerten Aushärtung des Klebstoffs zu einer frei wählbaren Zeit an einem frei wählbaren Ort.

In einer alternativen Ausführungsform handelt es sich bei dem Substrat um einen abgebundenen Klebstoff, der infolge der durch die Einwirkung der elektromagnetischen Strahlung hervorgerufenen Erwärmung erweicht. Im Falle chemisch abgebundener Klebstoffe beruht das Erweichen darauf, daß thermisch labile Bindungen in der Klebstoffmatrix aufgetrennt werden. Beispiele solcher thermisch labiler Gruppen wurden weiter oben genannt. In dieser Ausführungsform dient das Verfahren zum gezielten Lösen von Klebeverbindungen an einer frei wählbaren Stelle zu einer frei wählbaren Zeit. Das Lösen der Klebeverbindung erfolgt dabei ohne Einwirkung von Chemikalien und unter Bedingungen, unter denen die zusammengefügten Materialien nicht geschädigt und nicht nennenswert erwärmt werden.

In einer weiteren Ausführungsform kann es sich bei dem Substrat um einen Schmelzklebstoff handeln, der infolge der durch die Einwirkung der elektromagnetischen Strahlung hervorgerufenen Erwärmung reversibel erweicht. Dieses reversible Erweichen kann sowohl zum gezielten Herstellen der Klebeverbindung als auch zu deren gezieltem Lösen verwendet werden.

Damit betrifft die Erfindung in einem engeren Aspekt ein Verfahren zum Lösen von Klebeverbindungen zwischen zwei Körperoberflächen, dadurch gekennzeichnet, daß die Klebeverbindung durch einen Klebstoff bewirkt wird, der, bezogen auf das Gesamtgewicht des Klebstoffs, 0,1 bis 70 Gew.-%, vorzugsweise 1 bis 30 Gew.-% insbesondere 5 bis 20 Gew.-% metallische, magnetische, ferrimagnetische, ferromagnetische, antiferromagnetische oder superparamagnetische Partikel mit einer mittleren Teilchengröße zwischen 1 und 5000 nm enthält, wobei man den Klebstoff einer Mikrowellenstrahlung mit einer Frequenz im Bereich von 1 bis 300 GHz aussetzt und gleichzeitig auf den Klebstoff ein magnetisches Gleichfeld einwirken läßt, dessen Feldstärke mindestens doppelt so hoch ist wie die Stärke des Erdmagnetfeldes, wobei der Klebstoff sich

a) im Falle eines thermoplastischen Klebstoffs über den Erweichungspunkt des thermoplastischen Bindemittels erwärmt oder

b) im Falle eines duroplastischen Klebstoffs auf eine Temperatur erwärmt, die eine Rückspaltung der vernetzten Struktur der Bindemittelmatrix bewirkt, so daß - gegebenenfalls unter mechanischer Belastung - die verklebten Körperoberflächen voneinander getrennt werden können.

Dabei sind in diesem Verfahren solche nanoskaligen Partikel geeignet, die weiter oben hinsichtlich chemischer Natur und Teilchengröße näher beschrieben wurden. Auch für die vorgezogenen Frequenzbereiche der Mikrowellenstrahlung sowie für die vorgezogene Einstellung des Gleichfeldes gelten die weiter oben genannten Bedingungen. Ebenfalls wurden weiter oben Beispiele für geeignete Klebstofftypen angegeben.

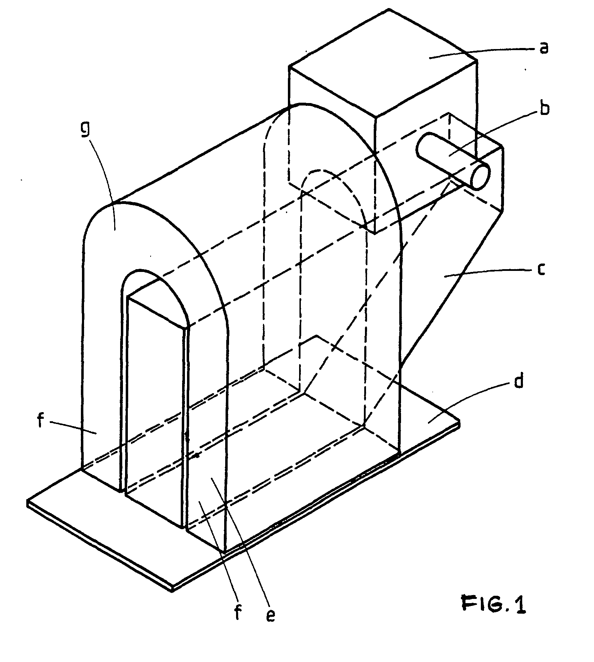

Zum Umfang der vorliegenden Erfindung gehört auch eine Vorrichtung zum gleichzeitigen Erzeugen einer Mikrowellenstrahlung mit einer Frequenz im Bereich von 1 bis 300 GHz und eines magnetischen Gleichfeldes, dessen Feldstärke mindestens doppelt so hoch ist wie die Stärke des Erdmagnetfeldes, enthaltend ein Magnetron, eine Antenne und einen Wellenleiter zumErzeugen und Abstrahlen der Mikrowellenstrahlung sowie einen Elektromagneten oder einen Permanentmagneten zum Erzeugen des magnetischen Gleichfeldes, wobei Antenne, Wellenleiter und Elektromagnet oder Permanentmagnet derart angeordnet sind, daß die Mikrowellen so aus der Vorrichtung abgestrahlt werden, daß die Feldlinien des magnetischen Gleichfeldes zumindest in einem Teil des von den Mikrowellen durchstrahlten Raums in einem Winkel zwischen 45° und 135° (vorzugsweise zwischen 80° und 100°) zum Richtungsvektor der Mikrowellenstrahlung stehen. Eine schematische Zeichnung einer derartigen Vorrichtung ist als Figur 1 wiedergegeben. Das Magnetron erzeugt ein Mikrowellenfeld im genannten Frequenzbereich, vorzugsweise im Bereich von 1,5 bis 10 GHz, insbesondere von 2 bis 3 GHz. Die Mikrowellen werden durch die Antenne in den Wellenleiter (Mikrowellenresonator) abgestrahlt, aus dem sie durch den Heizspalt in der Bodenplatte in das zu erwärmende Substrat austreten. Zum Erzeugen des magnetischen Gleichfelds ist in der Figur 1 als Beispiel ein Dauermagnet vorgesehen, dessen Magnetpole in der Nähe des Heizspalts liegen. Die magnetischen Feldlinien zwischen den Magnetpolen durchdringen so das unter der Bodenplatte liegende zu erwärmende Substrat. Die Verwendung eines Dauermagneten ist wegen der besonders einfachen Ausführungsform der erfindungsgemäßen Vorrichtung bevorzugt. Ein geeignet angeordneter Elektromagnet könnte jedoch ebenfalls verwendet werden und hätte den zusätzlichen Vorteil, daß die magnetische Feldstärke durch Auswahl der Stromstärke eingestellt werden kann.

Weiterhin umfaßt die vorliegende Erfindung die Verwendung dieser Vorrichtung in den vorstehend beschriebenen Verfahren zum Erwärmen eines Substrats, insbesondere zum gesteuerten Herstellen oder Lösen einer Klebeverbindung.

Das erfindungsgemäße Verfahren und die erfindungsgemäße Vorrichtung können insbesondere eingesetzt werden beim Zerlegen geklebter Geräte und Fahrzeuge für Reparatur-, Recycling- und/oder Entsorgungszwecke sowie zur gesteuerten Herstellung von Klebeverbindungen in der Fertigung.

Bezugszeichenliste

    a) Magnetron
    b) Antenne
    c) Wellenleiter (Hohlraumresonator)
    d) Bodenplatte
    e) Austrittsöffnung für die Mikrowellen (= Heizspalt)
    f) Magnetpole
    g) Dauermagnet

Figur 1

Schemazeichnung einer Vorrichtung, die Mikrowellen und ein magnetisches Gleichfeld erzeugt.

**Patentansprüche**

1. Verfahren zum Erwärmen eines Substrats, das, bezogen auf das Gesamtgewicht des Substrats, 0,1 bis 70 Gew.-% metallische, magnetische, ferrimagnetische, ferromagnetische, antiferromagnetische oder superparamagnetische Partikel mit einer mittleren Teilchengröße zwischen 1 und 5000 nm enthält, wobei man das Substrat einer elektromagnetischen Strahlung aussetzt, **dadurch gekennzeichnet, daß** die elektromagnetische Strahlung eine Mikrowellenstrahlung mit einer Frequenz im Bereich von 1 bis 300 GHz darstellt und man gleichzeitig auf das Substrat ein magnetisches Gleichfeld einwirken läßt, dessen Feldstärke mindestens doppelt so hoch ist wie die Stärke des Erdmagnetfeldes.

2. Verfahren nach Anspruch 1, **dadurch gekennzeichnet, daß** die metallischen, magnetischen, ferrimagnetischen, ferromagnetischen, antiferromagnetischen oder superparamagnetischen Partikel eine mittlere Teilchengröße zwischen 1 und 500 nm, insbesondere zwischen 2 und 100 nm aufweisen.

3. Verfahren nach einem oder beiden der Ansprüche 1 und 2, **dadurch gekennzeichnet, daß** die metallischen, magnetischen, ferrimagnetischen, ferromagnetischen, antiferromagnetischen oder superparamagnetischen Partikel ausgewählt werden aus Aluminium, Cobalt, Eisen, Nickel oder deren Legierungen, Metalloxiden vom Typ des Bariumhexaferrits, n-Maghemits ($\gamma$-$Fe_2O_3$), n-Magnetits ($Fe_3O_4$) oder der Ferrite vom Typ des $MeFe_2O_4$, wobei Me ein zweiwertiges Metall ausgewählt aus Mangan, Kupfer, Zink, Cobalt, Nickel, Magnesium, Calcium, Cadmium ist.

4. Verfahren nach einem oder mehreren der Ansprüche 1 bis 3, **dadurch gekennzeichnet, daß** die elektromagnetische Strahlung eine Mikrowellenstrahlung mit einer Frequenz im Bereich von 1,5 bis 10 GHz, vorzugsweise im Bereich von 2 bis 3 GHz darstellt.

5. Verfahren nach einem oder mehreren der Ansprüche 1 bis 4, **dadurch gekennzeichnet, daß** man das magnetische Gleichfeld derart auf das Substrat einwirken läßt, daß die magnetischen Feldlinien des Gleichfeldes innerhalb des Substrats zumindest teilweise in einem Winkel zwischen 45° und 135° zum Richtungsvektor der elektromagnetischen Strahlung verlaufen.

6. Verfahren nach einem oder mehreren der Ansprüche 1 bis 5, **dadurch gekennzeichnet, daß** es sich bei dem Substrat um einen abgebundenen oder nicht abgebundenen Klebstoff oder um einen Schmelzklebstoff handelt.

7. Verfahren nach Anspruch 6, **dadurch gekennzeichnet, daß** es sich bei dem Substrat um einen nicht abgebundenen Klebstoff handelt, der in Folge der durch die Einwirkung der elektromagnetischen Strahlung hervorgerufenen Erwärmung abbindet.

8. Verfahren nach Anspruch 6, **dadurch gekennzeichnet, daß** es sich bei dem Substrat um einen abgebundenen Klebstoff handelt, der in Folge der durch die Einwirkung der elektromagnetischen Strahlung hervorgerufenen Erwärmung erweicht.

9. Verfahren nach Anspruch 6, **dadurch gekennzeichnet, daß** es sich bei dem Substrat um einen Schmelzklebstoff handelt, der in Folge der durch die Einwirkung der elektromagnetischen Strahlung hervorgerufenen Erwärmung erweicht.

10. Verfahren zum Lösen von Klebeverbindungen zwischen zwei Körperoberflächen, **dadurch gekennzeichnet, daß** die Klebeverbindung durch einen Klebstoff bewirkt wird, der, bezogen auf das Gesamtgewicht des Klebstoffs, 0,1 bis 70 Gew.-% metallische, magnetische, ferrimagnetische, ferromagnetische, antiferromagnetische oder superparamagnetische Partikel mit einer mittleren Teilchengröße zwischen 1 und 5000 nm enthält, wobei man den Klebstoff einer Mikrowellenstrahlung mit einer Frequenz im Bereich von 1 bis 300 GHz aussetzt und gleichzeitig auf den Klebstoff ein magnetisches Gleichfeld einwirken läßt, dessen Feldstärke mindestens doppelt so hoch ist wie die Stärke des Erdmagnetfeldes, wobei der Klebstoff sich

   a) im Falle eines thermoplastischen Klebstoffs über den Erweichungspunkt des thermoplastischen Bindemittels erwärmt oder
   b) im Falle eines duroplastischen Klebstoffs auf eine Temperatur erwärmt, die eine Rückspaltung der vernetzten Struktur der Bindemittelmatrix bewirkt, so daß - gegebenenfalls unter mechanischer Belastung - die verklebten Körperoberflächen voneinander getrennt werden können.

11. Verfahren nach Anspruch 10, **dadurch gekennzeichnet, daß** man das magnetische Gleichfeld derart auf den Klebstoff einwirken läßt, daß die magnetischen Feldlinien des Gleichfeldes innerhalb des Klebstoffs zumindest teilweise in einem Winkel zwischen 45° und 135° zum Richtungsvektor der elektromagnetischen Strahlung verlaufen.

12. Verwendung einer Vorrichtung zum gleichzeitigen Erzeugen einer Mikrowellenstrahlung mit einer Frequenz im Bereich von 1 bis 300 GHz und eines magnetischen Gleichfeldes, dessen Feldstärke mindestens doppelt so hoch ist wie die Stärke des Erdmagnetfeldes, enthaltend ein Magnetron, eine Antenne und einen Wellenleiter zum Erzeugen und Abstrahlen der Mikrowellenstrahlung sowie einen Elektromagneten oder einen Permanentmagneten zum Erzeugen des magnetischen Gleichfeldes, wobei Antenne, Wellenleiter und Elektromagnet oder Permanentmagnet derart angeordnet sind, daß die Mikrowellen so aus der Vorrichtung abgestrahlt werden, daß die Feldlinien des magnetischen Gleichfeldes zumindest in einem Teil des von den Mikrowellen durchstrahlenten Raums in einem Winkel zwischen 45° und 135° zum Richtungsvektor der Mikrowellenstrahlung stehen, in einem Verfahren nach einem oder mehreren der Ansprüche 1 bis 11.

**Claims**

1. A process for heating a substrate which contains - based on the total weight of the substrate - 0.1 to 70% by weight of metallic, magnetic, ferrimagnetic, ferromagnetic, antiferromagnetic or superparamagnetic particles having an average particle size of 1 to 5,000 nm, the substrate being exposed to electromagnetic radiation, **characterized in that** the electromagnetic radiation is microwave radiation with a frequency in the range from 1 to 300 GHz and the substrate is simultaneously exposed to a d.c. magnetic field of which the field strength is at least twice the strength of the earth's magnetic field.

2. A process as claimed in claim 1, **characterized in that** the metallic, magnetic, ferrimagnetic, ferromagnetic, antiferromagnetic or superparamagnetic particles have an average particle size of 1 to 500 nm and more particularly 2 to 100 nm.

3. A process as claimed in one or both of claims 1 and 2, **characterized in that** the metallic, magnetic, ferrimagnetic, ferromagnetic, antiferromagnetic or superparamagnetic particles are selected from aluminium, cobalt, iron, nickel or alloys thereof, metal oxides of the barium hexaferrite, n-maghemite ($\gamma$-Fe$_2$O$_3$) or n-magnetite (Fe$_3$O$_4$) type or ferrites of the MeFe$_2$O$_4$ type, where Me is a divalent metal selected from manganese, copper, zinc, cobalt, nickel, magnesium, calcium and cadmium.

4. A process as claimed in one or more of claims 1 to 3, **characterized in that** the electromagnetic radiation comprises microwave radiation with a frequency in the range from 1.5 to 10 GHz and preferably in the range from 2 to 3 GHz.

5. A process as claimed in one or more of claims 1 to 4, **characterized in that** the substrate is preferably exposed to the d.c. magnetic field in such a way that the magnetic field lines of the d.c. field within the substrate extend at least partly at an angle of 45° to 135° to the directional vector of the electromagnetic radiation.

6. A process as claimed in one or more of claims 1 to 5, **characterized in that** the substrate is a set or unset adhesive or a hotmelt adhesive.

7. A process as claimed in claim 6, **characterized in that** the substrate is an unset adhesive which sets as a result of the heating effect of exposure to the electromagnetic radiation.

8. A process as claimed in claim 6, **characterized in that** the substrate is a set adhesive which softens as a result of the heating effect of exposure to the electromagnetic radiation.

9. A process as claimed in claim 6, **characterized in that** the substrate comprises a hotmelt adhesive which softens as a result of the heating effect of exposure to the electromagnetic radiation.

10. A process for dissolving adhesive bonds between the surfaces of two substrates, **characterized in that** the adhesive bond is established by an adhesive which contains - based on the total weight of the adhesive - 0.1 to 70% by weight of metallic, magnetic, ferrimagnetic, ferromagnetic, antiferromagnetic or superparamagnetic particles having an average particle size of 1 to 5,000 nm, the substrate being exposed to microwave radiation with a frequency in the range from 1 to 300 GHz and the adhesive being simultaneously exposed to a d.c. magnetic field of which the field strength is at least twice the strength of the earth's magnetic field, the adhesive

   a) in the case of a thermoplastic adhesive, being heated beyond the softening point of the thermoplastic binder or
   b) in the case of a thermoset adhesive, being heated to a temperature at which the crosslinked structure of the binder matrix is dissociated so that the adhesively bonded surfaces of the substrates may be separated from one another, optionally with application of mechanical force.

**11.** A process as claimed in claim 10, **characterized in that** the adhesive is exposed to the d.c. magnetic field in such a way that the magnetic field lines of the d.c. field within the adhesive extend at least partly at an angle of 45° to 135° to the directional vector of the electromagnetic radiation.

**12.** The use of a device for the simultaneous production of microwave radiation with a frequency in the range from 1 to 300 GHz and a d.c. magnetic field of which the field strength is at least twice the strength of the earth's magnetic field, comprising a magnetron, an antenna and a waveguide for producing and emitting the microwave radiation and an electromagnet or a permanent magnet for producing the d.c. magnetic field, the antenna, waveguide and electromagnet or permanent magnet being so arranged that the microwaves are emitted from the device in such a way that the field lines of the d.c. magnetic field in at least part of the space through which the microwaves pass are at an angle of 45° to 135° to the directional vector of the electromagnetic radiation, in the process claimed in one or more of claims 1 to 11.

**Revendications**

**1.** Procédé pour échauffer un substrat, qui contient 0,1 à 70% en poids, par rapport au poids total de substrat, de particules métalliques, magnétiques, ferrimagnétiques, ferromagnétiques, antiferromagnétiques ou superparamagnétiques, ayant une taille moyenne de particule comprise entre 1 et 5 000 nm, dans lequel on expose le substrat à un rayonnement électromagnétique, **caractérisé en ce que** le rayonnement électromagnétique représente un rayonnement micro-ondes ayant une fréquence dans la bande de 1 à 300 GHz et que l'on laisse agir en même temps un champ magnétique continu sur le substrat, dont l'intensité de champ est au moins deux fois supérieure à l'intensité du champ magnétique terrestre.

**2.** Procédé selon la revendication 1, **caractérisé en ce que** les particules métalliques, magnétiques, ferrimagnétiques, ferromagnétiques, antiferromagnétiques ou superparamagnétiques, présentent une taille moyenne de particule comprise entre 1 et 500 nm, en particulier entre 2 et 100 nm.

**3.** Procédé selon l'une des revendications 1 et 2 ou les deux, **caractérisé en ce que** les particules métalliques, magnétiques, ferrimagnétiques, ferromagnétiques, antiferromagnétiques ou superparamagnétiques, sont choisies en aluminium, en cobalt, en fer, en nickel ou en leurs alliages, en oxyde métallique du type de l'hexaferrite de baryum, en n-maghémite ($\gamma$-$Fe_2O_3$), en n-magnétite ($Fe_3O_4$), ou en ferrites du type $MeFe_2O_4$, Me étant un métal bivalent choisi parmi le manganèse, le cuivre, le zinc, le cobalt, le nickel, le magnésium, le calcium, le cadmium.

**4.** Procédé selon l'une ou plusieurs des revendications 1 à 3, **caractérisé en ce que** le rayonnement électromagnétique représente un rayonnement micro-ondes ayant une fréquence dans la bande de 1,5 à 10 GHz, de préférence dans la bande de 2 à 3 GHz.

**5.** Procédé selon l'une ou plusieurs des revendications 1 à 4, **caractérisé en ce que** on laisse agir le champ magnétique continu sur le substrat, de sorte que les lignes de champ magnétique du champ continu à l'intérieur du substrat, suivent leur cours en faisant au moins partiellement un angle compris entre 45 et 135° par rapport au vecteur directeur du rayonnement électromagnétique.

**6.** Procédé selon l'une ou plusieurs des revendications 1 à 5, **caractérisé en ce que**, quant au substrat, il s'agit d'une colle ayant pris ou n'ayant pas pris, ou bien d'une colle fusible.

**7.** Procédé selon la revendication 6, **caractérisé en ce que**, quant au substrat, il s'agit d'une colle n'ayant pas pris, qui prend à la suite de l'échauffement provoqué par l'action du rayonnement électromagnétique.

**8.** Procédé selon la revendication 6, **caractérisé en ce que**, quant au substrat, il s'agit d'une colle ayant pris, qui se ramollit à la suite de l'échauffement provoqué par l'action du rayonnement électromagnétique.

**9.** Procédé selon la revendication 6, **caractérisé en ce que**, quant au substrat, il s'agit d'une colle fusible, qui se ramollit à la suite de l'échauffement provoqué par l'action du rayonnement électromagnétique.

**10.** Procédé pour dissoudre des liaisons par adhésif entre deux surfaces de corps, **caractérisé en ce que** la liaison par adhésif est produite par une colle qui contient 0,1 à 70% en poids, par rapport au poids total de la colle, de particules métalliques, magnétiques, ferrimagnétiques, ferromagnétiques, antiferromagnétiques ou superparamagnétiques, ayant une taille moyenne de particule comprise entre 1 et 5 000 nm, dans lequel on expose la colle à un rayonnement micro-ondes ayant une fréquence dans la bande de 1 à 300 GHz, et on laisse agir en même temps un champ magnétique continu sur la colle, dont l'intensité de champ est au moins deux fois supérieure à l'intensité du champ magnétique terrestre, dans lequel la colle s'échauffe

a) au-delà du point de ramollissement du liant thermoplastique dans le cas d'une colle thermoplastique, ou bien s'échauffe

b) dans le cas d'une colle duroplastique, jusqu'à une température qui provoque une redissociation de la structure réticulée de la matrice de liant, de sorte que l'on peut séparer les surfaces de corps collées l'une de l'autre, éventuellement sous une sollicitation mécanique.

11. Procédé selon la revendication 10, **caractérisé en ce que** l'on laisse agir le champ magnétique continu sur la colle de sorte que les lignes de champ magnétique du champ continu à l'intérieur de la colle suivent leur cours en faisant au moins partiellement un angle compris entre 45° et 135°, par rapport au vecteur directeur du rayonnement électromagnétique.

12. Utilisation d'un dispositif pour la production simultanée d'un rayonnement micro-ondes ayant une fréquence dans la bande de 1 à 300 GHz et d'un champ magnétique continu, dont l'intensité du champ est au moins deux fois supérieure à l'intensité du champ magnétique terrestre, contenant un magnétron, une antenne, et un guide d'ondes pour produire et rayonner le rayonnement micro-ondes, ainsi qu'un électro-aimant ou un aimant permanent pour produire le champ magnétique continu, où l'antenne, le guide d'ondes et l'électro-aimant ou l'aimant permanent sont disposés de sorte que les micro-ondes sont émises du dispositif de sorte que les lignes de champ du champ magnétique continu se tiennent au moins dans une partie de l'espace irradiée par les micro-ondes, selon un angle compris entre 45 et 135° par rapport au vecteur directeur du rayonnement micro-ondes, dans un procédé selon l'une ou plusieurs des revendications 1 à 11.

FIG. 1